# EUROPEAN PATENT SPECIFICATION

(11) **EP 3 776 149 B1**
(45) Date of publication and mention of the grant of the patent: **20.11.2024**
(21) Application number: 19820324.2
(22) Date of filing: 17.06.2019
(51) Int. Cl.: G06N 3/0464, G06N 3/047, G06N 3/08, G06N 3/04, G06F 3/16, G06V 40/16, G06V 40/20, G06N 3/045, G06V 10/70

(54) **ELECTRONIC DEVICE AND OPERATING METHOD THEREOF FOR OUTPUTTING RESPONSE TO USER INPUT, BY USING APPLICATION**
ELEKTRONISCHE VORRICHTUNG UND BETRIEBSVERFAHREN DAFÜR ZUR AUSGABE VON ANTWORTEN AUF BENUTZEREINGABEN UNTER VERWENDUNG EINER ANWENDUNG
DISPOSITIF ÉLECTRONIQUE ET SON PROCÉDÉ DE FONCTIONNEMENT POUR DÉLIVRER EN SORTIE UNE RÉPONSE À UNE ENTRÉE D'UTILISATEUR EN UTILISANT UNE APPLICATION

(30) Priority: 15.06.2018 IN 201841022428; 14.05.2019 IN 201841022428; 10.06.2019 KR 20190068263
(43) Date of publication of application: 17.02.2021
(73) Proprietor: Samsung Electronics Co., Ltd., Gyeonggi-do 16677 (KR)
(72) Inventor: VADACKUPURATH MANI, Parameswaranath, Kerala 685533 (IN); BHAMIDIPATI, Sreevatsa Dwaraka, Bangalore Karnataka 560037 (IN); VALA, Vanraj, Bangalore Karnataka 560035 (IN); SHARIFF, Mohamed Akram Ulla, Bengaluru Karnataka 560032 (IN); REDDY, Kachana Raghunatha, Bangalore Karnataka 560048 (IN); POOJARY, Namitha, Bangalore Karnataka 560016 (IN); RAMPELLI, Mahender, Warangal Urban Telangana 506001 (IN); MEHER, Beda Prakash, Odisha 770002 (IN); MURTHY, Sujay Srinivasa, Bangalore Karnataka 560026 (IN); VATSAL, Shubham, Bangalore Karnataka 560016 (IN)
(74) Representative: Gulde & Partner
(86) International application number: PCT/KR2019/007284
(87) International publication number: WO 2019/240562

(56) References cited:
- US-A1- 2015 178 388
- US-A1- 2016 210 023
- US-A1- 2016 352 656
- US-A1- 2017 083 506
- US-A1- 2017 160 813
- US-A1- 2017 228 240
- US-A1- 2018 012 596
- US-A1- 2018 139 587

## Description

### [Technical Field]

The disclosure relates to an electronic device and an operating method thereof for outputting a response to a user input, by using an application.

### [Background Art]

An electronic device may output a response corresponding to an input of a user. In this regard, the electronic device may output a response including content that is more appropriate for the user, in further consideration of contextual information of the user.

However, contextual information of the user may continuously change in real time, and thus, even when a response is generated in consideration of the contextual information of the user, the response that is not appropriate for a current context of the user may be provided, due to that the contextual information changes in real time.

Therefore, there is a need to develop a method of providing a response appropriate to a user input based on contextual information of the user which changes in real time.

The above information is presented as background information only to assist with an understanding of the disclosure. No determination has been made, and no assertion is made, as to whether any of the above might be applicable as prior art with regard to the disclosure.

The US 2016/0352656 A1 discloses a computer-implemented method for state-free generation of context-sensitive conversational responses based on the input message and conversation context data. The US 2017/0160813A1 discloses a method for virtual personal assistant in which a user state and multi-modal cues are used to provide a context-response to a user input. The US 2016/0210023 A1 discloses a method of displaying a response in response to an inquiry of a user input together with an image of a subject providing the response. The US 2017/0083506 A1 discloses a method and a computer device for suggesting emoji characters to be added to the inputted text by the user by using an aggregate emotional state.

### [Disclosure]

### [Technical Solution]

Aspects of the disclosure are to address at least the above-mentioned problems and/or disadvantages and to provide at least the advantages described below. Accordingly, an aspect of the disclosure is to provide an electronic device and an operating method thereof for outputting a response appropriate for a user input.

Another aspect of the disclosure is to provide a computer program product including a computer-readable recording medium having recorded thereon a program for executing the operating method in a computer. Technical problems to be solved are not limited to those mentioned above, and other technical problems may exist.

Additional aspects will be set forth in part in the description which follows and, in part, will be apparent from the description, or may be learned by practice of the presented embodiments.

### [Description of Drawings]

FIG. 1 is a diagram of a system for providing a response to a user input according to an embodiment of the disclosure;
FIG. 2 is a block diagram of an electronic device according to an embodiment of the disclosure;
FIG. 3 is a more detailed block diagram of an electronic device according to an embodiment of the disclosure;
FIG. 4 is a diagram of a processor according to an embodiment of the disclosure;
FIG. 5 is a flowchart illustrating a method of outputting a response to a user input according to an embodiment of the disclosure;
FIG. 6 is a diagram illustrating an example of generating a second response according to an embodiment of the disclosure;
FIG. 7 is a diagram illustrating an example of generating second data to generate a second response according to an embodiment of the disclosure;
FIG. 8 is a diagram illustrating an example of obtaining feedback information according to an embodiment of the disclosure;
FIG. 9 is a flowchart illustrating a method of generating a second response including second content according to an embodiment of the disclosure;
FIG. 10 is a diagram illustrating a method of training a generative model to generate a second response according to an embodiment of the disclosure;
FIG. 11 is a diagram illustrating a method of training a generative model according to an embodiment of the disclosure;
FIG. 12 is a diagram illustrating an example of outputting a response to a user input by an electronic device according to an embodiment of the disclosure;
FIG. 13 is a diagram illustrating an example of acquiring contextual information of a user based on user profile information according to an embodiment of the disclosure;
FIG. 14 is a diagram illustrating an example of generating a second response based on user profile information according to an embodiment of the disclosure;
FIG. 15 is a diagram illustrating an example of providing a response to a user input according to an embodiment of the disclosure;
FIG. 16 is a diagram illustrating an example of providing a response to a user input according to an embodiment of the disclosure;
FIG. 17 is a diagram illustrating an example of providing a response to a user input according to an embodiment of the disclosure; and
FIG. 18 is a diagram illustrating an example of providing a response to user input according to an embodiment of the disclosure.

Throughout the drawings, it should be noted that like reference numbers are used to depict the same or similar elements, features, and structures.

### [Mode for Invention]

In accordance with the invention, a method of outputting a response to a user input in an electronic device is provided according to claim 1.

In accordance with another aspect of the invention, an electronic device for outputting a response to a user input is provided according to claim 7.

According to yet another aspect of the invention, a computer program product is provided according to claim 14.

Other aspects, advantages, and salient features of the disclosure will become apparent to those skilled in the art from the following detailed description, which, taken in conjunction with the annexed drawings, discloses various embodiments of the invention as defined by the claims.

The following description with reference to the accompanying drawings is provided to assist in a comprehensive understanding of various embodiments of the invention as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the invention as defined by the claims. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Throughout the specification, it will also be understood that when an element is referred to as being "connected to" another element, it can be directly connected to the other element, or it can be electrically connected to the other element by having an intervening element interposed therebetween. Also, the term "include" an element does not preclude the other elements but further includes the element unless otherwise stated.

Throughout the disclosure, the expression "at least one of a, b or c" indicates only a, only b, only c, both a and b, both a and c, both b and c, all of a, b, and c, or variations thereof.

Hereinafter, the disclosure will be described in detail with reference to the accompanying drawings.

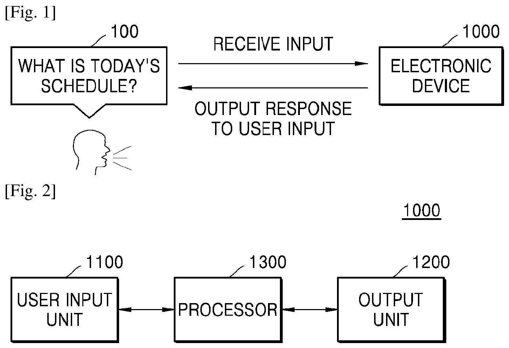

FIG. 1 is a diagram of a system that provides a response to a user input according to an embodiment of the disclosure.

Referring to FIG. 1, according to an embodiment of the disclosure, a system for providing a response to a user input may include an electronic device 1000. The electronic device 1000 may receive an input 100 from a user and output a response to the received input 100.

The electronic device 1000 according to an embodiment of the disclosure may be configured to receive the input 100 from the user and output a response to the received input 100, and may be implemented in various forms. For example, the electronic device 1000 described herein may be, but not limited to, a digital camera, a smart phone, a laptop computer, a tablet personal computer (PC), an e-book terminal, a digital broadcasting terminal, a personal digital assistant (PDA), a portable multimedia player (PMP), a navigation device, an moving picture experts group phase 1 or phase 2 (MPEG-1 or MPEG-2) audio layer 3 (MP3) player, an artificial intelligence (Al) speaker, or the like.

The electronic device 1000 may be a wearable device worn by the user. The wearable device may include, but not limited to, at least one of an accessory type device (e.g., a watch, a ring, a wrist band, an ankle band, a necklace, spectacles, and contact lenses), a head-mounted type device (HMD), a textile- or clothing-integrated type device (e.g., e-textiles), a body-attached type device (e.g., a skin pad), or a bio-implantable type device (e.g., implantable circuit). Hereinafter, a smart phone will be described as an example of the electronic device 1000 for convenience.

According to an embodiment of the disclosure, an application may be used in the electronic device 1000 to provide a response to the input. The application may provide an interactive interface to receive speech input from the user and output a response to the speech input of the user. The application according to an embodiment of the disclosure may include, but not limited to, a virtual assistant, an Al assistant, or the like. The virtual assistant or the Al assistant may be a software agent that processes a task required by the user and provides a personalized service for the user.

The electronic device 1000 generates a response to the input 100 of the user and output the generated response.

The input 100 of the user according to an embodiment of the disclosure may include a query to obtain particular information. Also, the input 100 of the user according to an embodiment of the disclosure may include instructions for controlling the electronic device 1000. Without being limited to the above-described example, the input 100 according to an embodiment of the disclosure may include various inputs for various purposes and may be received by the electronic device 1000 from the user.

The input 100 of the user according to an embodiment of the disclosure may be received by the electronic device 1000 from the user, for example, received by the electronic device 1000 as a speech input, a text input, a gesture input, or inputs via various types of sensors. Without being limited to the above-described example, the input 100 of the user may be input to the electronic device 1000 via various input methods.

The response is generated by combining a first response including a first content with a second response including a second content, which is a different type from the first content. The first response includes the first content containing response information corresponding to the input of the user. In addition, the second response, as a response corresponding to the input of the user, includes the second content which is a different type from that of the first content and generated based on contextual information of the user.

The second response according to an embodiment of the disclosure may further include at least one content, which is the same type as that of the first content and generated based on contextual information, in addition to the second content of a different type from that of the first content.

Contextual information of the user according to an embodiment of the disclosure may include various types of information related the user such as behavioral traits of the user, individual traits of the user (e.g., age and profession), preferences of the user, interests of the user, aesthetic preferences of the user, surrounding environments of the user, a state of the user, social network service (SNS) accounts of the user, SNS activities of the user, operation states of the electronic device 1000, position information of the user, or position information of the electronic device 1000. Without being limited to the above-described example, the contextual information of the user may include various types of information indicating contexts of the user.

Thus, a response to the input of the user is provided based on the first response, which corresponds to the input of the user in which contextual information of the user is not considered, and the second response, which includes various types of information and is generated based on the contextual information of the user.

For example, the second response may include additional information generated based on current contextual information of the user and determined to be currently appropriate for the user. Also, the second response includes a type of content that is different from the content type of the first response, generated based on contextual information, and determined to be preferred by the user.

In addition, the type of the first content included in the first response includes at least one of text, a moving image, an image, or an audio, as a content type directly corresponding to the input of the user. Also, the type of the second content included in the second response includes, for example, at least one of text, a moving image, an image, an audio, a light-emitting diode (LED) output, a vibration output, a visual or audible effect, or a user interface as a content type additionally provided based on contextual information of the user. Without being limited to the above-described example, the first response and the second response may include various types of contents.

The above-described user interface, as a user interface additionally provided to the user in accordance with contextual information of the user, may include an interface for information retrieval, an interface for performing a route search function, an interface for translation, or the like. For example, the user interface may be provided by at least one application previously installed in the electronic device 1000.

Thus, the response includes the first response containing basic response information for the input in which contextual information is not considered and further includes the second response containing of information of various content types generated based on contextual information about the user which changes in real time.

The first response, as a basic response to the user input, is combined with the second response including additional contents generated based on contextual information, and a combined response is output, thereby providing better user experience. Also, by combining the first response with the second response including various types of contents and outputting the combined response, a richer response more appropriate for the user may be provided to the user, when compared to a case of providing the first response alone.

For example, an input 100 of "What is today's schedule?" is received by the electronic device 1000, the electronic device 1000 may generate a first response including "conference at 7 p.m." by text as a basic response corresponding to the input 100.

The electronic device 1000 also generates a second response by considering contextual information of the user. For example, when contextual information of the user indicates that the user is driving a car and cannot see a display of the electronic device 1000, the second response may include audio data converted from the text of the first response of "conference at 7 p.m." based on the above-described contextual information of the user via a text to speech (TTS) technique.

The electronic device 1000 according to an embodiment of the disclosure may generate a final response to be output by combining the first response with the second response and output the generated final response. For example, as a result of combining the first response with the second response, the electronic device 1000 may display "conference at 7 p.m." by text on the display simultaneously outputting the audio data of the second response via a speaker.

While a basic response to the user input is provided without any change according to a context of the user, an additional response according to contextual information of the user is further provided. Thus, according to an embodiment of the disclosure, because the basic response to the user input is not changed by contextual information, the user may easily predict a response for the input and an input a query satisfying a user's intent. In addition, because the response generated by considering contextual information is additionally provided, better user experience may be provided, as compared to when only the basic response to the input is provided.

Also, the context of the user continuously changes in real time, and thus contextual information of the user used while processing the user input may conflict with a current context of the user. For example, a response to the user input generated using contextual information different from a current contextual information of the user may be output due to delayed updating of the contextual information of the user. Thus, contextual information used to output the response may not match the context of the user after the response is output.

However, the basic response to the user input (e.g., first response) is not changed by the contextual information. Therefore, even when the contextual information is different from current contextual information of the user, the basic response to the user input is consistently provided.

The second response according to an embodiment of the disclosure may be additionally generated based on information related to the first response, as well as the contextual information. For example, the second response may be generated additionally based on feature information of the first content of the first response. Also, the second response may be generated additionally based on first data for generating the first response. The first data according to an embodiment of the disclosure is data used for generating the first response and may be generated based on analysis results of the input of the user.

The second response according to an embodiment of the disclosure may be additionally generated based on various information related to the first response without being limited to contextual information.

A method of outputting a response to a user input according to an embodiment of the disclosure may operate according to on-device AI technology only within the device. For example, the electronic device 1000 may process the user input and output a response to the user input without exchanging data with a cloud server. In addition, the electronic device 1000 may perform the operation according to an embodiment of the disclosure based on various types of information of the user, which are collected by the electronic device 1000 in real time, without using data stored in the cloud server.

According to the on-device AI technology, the electronic device 1000 may train an AI model based on data locally collected and may make determinations based on a trained Al model. Because the electronic device 1000 does not transmit the collected data to the outside and utilizes the data according to the on-device AI technology, personal information of the user may be protected and data processing speed may be increased.

For example, the electronic device 1000 may operate using the on-device AI technology without being connected to the cloud server depending on whether the AI model trained by the electronic device 1000 is sufficient to perform the operation using only information collected by the electronic device 1000, without using big data and regardless of unstable network environments of the electronic device 1000.

However, the electronic device 1000 may also perform the operation by exchanging data with the cloud server or the external device in conjunction with performing the operation according to the on-device AI technology. The electronic device 1000 may also perform the operation according to an embodiment of the disclosure by combining the above-described on-device AI technology and data exchange with the cloud server.

For example, when the operation performed using the cloud server is more efficient than that performed using the on-device AI technology based on the network environments and computation capability of the electronic device 1000, for example, when a data processing speed of the operation using the cloud server is higher than that using the on-device AI technology or data not including personal information of the user is transmitted to the cloud server, the operation according to an embodiment of the disclosure may be performed using the cloud server.

FIG. 2 is a block diagram of an electronic device according to an embodiment of the disclosure.

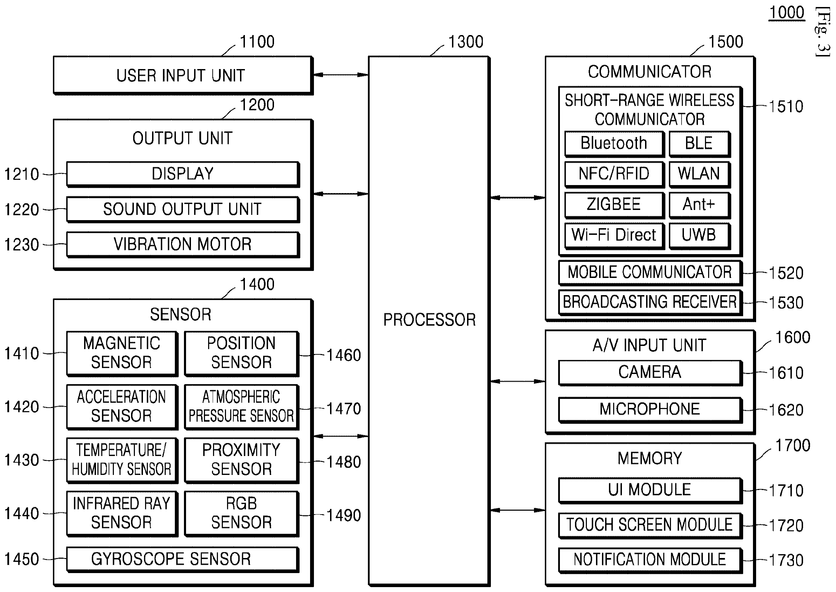

FIG. 3 is a more detailed block diagram of an electronic device according to an embodiment of the disclosure.

Referring to FIG. 2, the electronic device 1000 includes a user input unit 1100, a processor 1300, and an output unit 1200. However, all of the components shown in FIG. 2 are not essential components of the electronic device 1000. The electronic device 1000 may be implemented using more or less components than those shown in FIG. 2.

For example, the electronic device 1000 according to an embodiment of the disclosure may further include a sensor 1400, a communicator 1500, an audio/video (A/V) input unit 1600), and a memory 1700 in addition to the user input unit 1100, the processor 1300, and the output unit 1200 as shown in FIG. 3.

The user input unit 1100 refers to a device through which the user inputs data to control the electronic device 1000. For example, the user input unit 1100 may be, but not limited to, a key pad, a dome switch, a touch pad (e.g., a touch capacitive type touch pad, a pressure resistive type touch pad, an infrared beam sensing type touch pad, a surface acoustic wave type touch pad, an integral strain gauge type touch pad, and a piezo electric type touch pad), a jog wheel, or a jog switch.

The user input unit 1100 receives the input 100 of the user. For example, the user input unit 1100 may receive the input 100 of the user via various input methods using a microphone, a touch pad, a switch, a gesture input device, or the like of the electronic device 1000.

The output unit 120 may output an audio signal, a video signal, or a vibration signal. The output unit 120 may include a display 1210, a sound output unit 1220, and a vibration motor 1230.

According to an embodiment of the disclosure, the output unit 1200 may output a response to the input 100 of the user. According to an embodiment of the disclosure, the response may include various types of second contents. For example, the various types of contents such as a moving picture, an image, an audio, a light-emitting diode (LED) output, text, and a user interface may be output via the display 1210 or the sound output unit 1220, and a vibration output type content may be output via the vibration motor 1230.

The display 1210 may display and output information processed by the electronic device 1000. According to an embodiment of the disclosure, the display 1210 may display information of a response corresponding to the input 100 of the user.

Meanwhile, when the display 1210 and the touch pad constitute a touch screen in a layer structure, the display 1210 may be used as an input device as well as an output device. The display 1210 may include at least one of a liquid crystal display, a thin film transistor-liquid crystal display, an organic light-emitting diode, a flexible display, a three-dimensional (3D) display, or an electrophoretic display. In addition, the electronic device 1000 may include two or more displays 1210 according to implementations of the electronic device 1000.

The sound output unit 1220 outputs audio data received from the communicator 1500 or stored in the memory 1700. The sound output unit 1220 according to an embodiment of the disclosure may output audio data as a response corresponding to the input 100 of the user.

The vibration motor 1230 may output a vibration signal. In addition, the vibration motor 1230 may output a vibration signal when a touch is input onto the touch screen. The sound output unit 1220 according to an embodiment of the disclosure may output a vibration signal as a response corresponding to the input 100 of the user.

The processor 1300 is generally configured to control the overall operation of the electronic device 1000. For example, the processor 1300 is configured to control the overall operation of the user input unit 1100, the output unit 1200, the sensor 1400, the communicator 1500, the A/V input unit 1600, and the like by executing programs stored in the memory 1700. The electronic device 1000 may include at least one processor 1300.

The processor 1300 may be configured to process commands of a computer program by performing basic arithmetic, logic, and input/output calculations. The commands may be provided to the processor 1300 from the memory 1700 or may be received by the communicator 1500 and provided to the processor 1300. For example, the processor 1300 may be configured to execute commands in accordance with program codes stored in a recording medium such as a memory.

The at least one processor 1300 according to an embodiment of the disclosure may generate a response to the input 100 of the user. The response according to an embodiment of the disclosure may be generated by combining the first response including the first content with the second response including the second content of a different type from that of the first content.

The first response may include the first content containing response information matching the user input, and the second response as a response to the user input may include the second content that is different from the first content and is generated based on contextual information of the user.

The sensor 1400 may detect a state of the electronic device 1000 or an ambient state of the electronic device 1000 and transmit obtained information to the processor 1300.

According to an embodiment of the disclosure, contextual information of the user may be obtained based on the information obtained by the sensor 1400. The second response may be generated based on the contextual information. For example, the sensor 1400 may detect an emotion of the user from a facial expression of the user, and the electronic device 1000 may obtain contextual information of the user based thereon.

Also, according to an embodiment of the disclosure, feedback information from the user on the response provided according to an embodiment of the disclosure may be obtained based on the information obtained by the sensor 1400. A trained model that is used to generate the second response may be modified and refined based on the feedback information.

The sensor 1400 may include, but is not limited to, at least one of a geomagnetic sensor 1410, an acceleration sensor 1420, a temperature/humidity sensor 1430, an infrared ray sensor 1440, a gyroscope sensor 1450, a position sensor (e.g., global positioning system (GPS)) 1460, an atmospheric pressure sensor 1470, a proximity sensor 1480, or a red, green, and blue (RGB) sensor (illuminance sensor) 1490.

The communicator 1500 (e.g., a transceiver) may include at least one component enabling communications between the electronic device 1000 and a server (not shown) or an external device (not shown). For example, the communicator 1500 may include a short-range wireless communicator 1510, a mobile communicator 1520, and a broadcasting receiver 1530.

According to an embodiment of the disclosure, the communicator 1500 may receive data required to generate the response to the input 100 from the outside. For example, the communicator 1500 may receive at least one content to be output as a response to the input 100 from the outside.

The short-range wireless communicator 1510 may include, but not limited to, a Bluetooth communicator, a Bluetooth Low Energy (BLE) communicator, a near field communicator, a wireless local area network (WLAN) or Wi-Fi communicator, a Zigbee communicator, an infrared data association (IrDA) communicator, a Wi-Fi Direct (WFD) communicator, a ultra-wideband (UWB) communicator, and an Ant+ communicator.

The mobile communicator 1520 may transmit and receive wireless signals to and from at least one of a base station, an external terminal, or a server on a mobile communication network. In this regard, the wireless signals may include various types of data for transmitting and receiving audio call signals, video communication call signals, or text/multimedia message.

The broadcasting receiver 1530 may receive broadcasting signals and/or information related to broadcasting from the outside. The broadcasting channels may include satellite channels and terrestrial channels. According to an embodiment of the disclosure, the electronic device 1000 may not include the broadcasting receiver 1530.

The A/V input unit 1600 is configured to input audio signals or video signals and may include a camera 1610 and a microphone 1620. The camera 1610 may obtain image frames of a still image or a moving image via an image sensor in a video call mode or an image capturing mode. An image captured by the image sensor may be processed by the processor 1300 or a separate image processor (not shown). The microphone 1620 receives audio signals from the outside and processes the received signals into electrical sound data.

Information input via the A/V input unit 1600 may be used to obtain contextual information of the user. For example, the state, shape, position, or the like of the user may be determined based on video or audio data generated by the A/V input unit 1600, and contextual information of the user may be obtained based thereon.

The memory 1700 may store programs for processing and controlling of the processor 1300 and store data input to or output from the electronic device 1000.

The memory 1700 according to an embodiment of the disclosure may store one or more instructions and the at least one processor 1300 of the electronic device 1000 may perform the operation according to an embodiment of the disclosure by executing the one or more instructions.

In addition, the memory 1700 according to an embodiment of the disclosure may store information required to generate a response to the input 100. For example, the memory 1700 may store a trained model, virtual assistant application, collected contextual information of the user, and the like, which may be used to generate the response to the input 100. Without being limited to the above-described example, the memory 1700 may store various types of information required to generate the response to the input 100.

The memory 1700 may include at least one type of storage medium selected from a flash memory type, a hard disk type, a multimedia card micro type, a card type memory (e.g., secure digital (SD) or extreme digital (XD) memory), random access memory (RAM), static random access memory (SRAM), read-only memory (ROM), electrically erasable programmable read-only memory (EEPROM), programmable read-only memory (PROM), a magnetic memory, a magnetic disk, or an optical disk.

Programs stored in the memory 1700 may be categorized into a plurality of modules according to functions thereof, e.g., a user interface (UI) module 1710, a touch screen module 1720, and a notification module 1730.

The UI module 1710 may provide a specialized UI or a graphical user interface (GUI) interworking with the electronic device 1000 according to applications. The touch screen module 1720 may detect a touch gesture of the user on a touch screen and transmit information of the touch gesture to the processor 1300. The touch screen module 1720 according to an embodiment of the disclosure may recognize and analyze a touch code. The touch screen module 1720 may be configured as a separate hardware component including a controller.

Various sensors may be provided in or near the touch screen to detect a touch on the touch screen or a proximity touch. A tactile sensor may be an example of the sensor for detecting a touch on the touch screen. A tactile sensor is configured to detect a touch of an object with a human's tactile ability or more. The tactile sensor may obtain various information such as roughness of a contact surface, rigidity of a contact object, and temperature of a contact point.

The touch gesture of the user may include tap, touch-and-hold, double tap, drag, pan, flick, drag-and-drop, swipe, and the like.

The notification module 1730 may generate a signal for notifying occurrence of an event of the electronic device 1000.

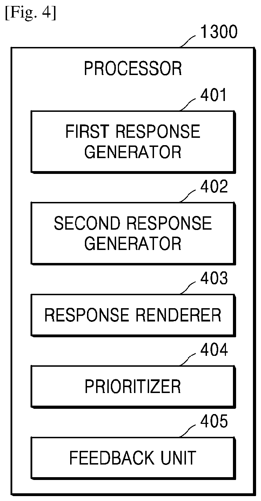

FIG. 4 is a diagram of a processor according to an embodiment of the disclosure.

Referring to FIG. 4, the processor 1300 may include a first response generator 401, a second response generator 402, a response renderer 403, a prioritizer 404, and a feedback unit 405 as components to perform the operation of generating a response to the input 100.

However, the components shown in FIG. 4 are only examples, and the electronic device 1000 may be implemented using more or less components than those shown in FIG. 4.

The first response generator 401 according to an embodiment of the disclosure is configured to determine a user's intent by analyzing the input of the user received by the electronic device 1000 and generate a first response corresponding to the user's intent.

For example, when the input received by the first response generator 401 is a speech input, text corresponding to the speech input may be obtained by performing speech recognition. Also, the first response generator 401 may determine the user's intention by performing natural language processing on the text corresponding to the input and generate a first response corresponding to the user's intent.

The second response generator 402 according to an embodiment of the disclosure is configured to obtain contextual information of the user and generate a second response to the user input based on the contextual information.

The second response generator 402 according to an embodiment of the disclosure may use a pre-trained model to generate the second response to the user input based on the contextual information. The trained model available for generation of the second response may be, for example, a generative model configured to generate a new second response from contextual information, such as a generative adversarial network (GAN).

According to an embodiment of the disclosure, a user's preference may be determined based on contextual information. According to an embodiment of the disclosure, the operation of determining the user's preference based on contextual information may be conducted by a convolution neural network (CNN) available for data recognition. For example, the user's preference may be determined based on contextual information by the CNN and the second response may be generated from the above-described generative model based on the determined preference.

The contextual information used to determine the user's preference may include various information on the user such as feedback information from the user on the provided response, information on contents used or purchased by the user, and information on traits of the user (e.g., age, residence, and profession).

Without being limited to the above-described example, various types of trained models may be used to generate the second response. According to an embodiment of the disclosure, at least one trained model used to generate the second response may be continuously modified to generate a second response appropriate for the user based on various data related to the user and collected by the electronic device 1000.

The response renderer 403 according to an embodiment of the disclosure is configured to combine the first response with the second response. For example, the response renderer 403 may combine the first response with the second response such that the first response is basically output and a visual or auditory response is additionally output as the second response. For example, a position or exterior of the first content of the first response may be appropriately modified according to a visual effect or a user interface included in the second response. In addition, the first response and the second response may be processed such that various types of the second contents of the second response may be output together with the first content of the first response. Without being limited to the above-described example, the response renderer 403 may combine the first response with the second response using various methods.

The prioritizer 404 according to an embodiment of the disclosure is configured to determine priorities of respective responses based on contextual information when a plurality of combined responses are obtained by the response renderer 403. For example, when a second response including a plurality of second contents is generated, the electronic device 1000 may generate a plurality of combined responses by combining the first content of the first response with the plurality of second contents. Also, when a plurality of first contents are generated, a plurality of combined responses may be generated by combining the plurality of first contents with at least one second content.

According to an embodiment of the disclosure, the prioritizer 404 may determine priorities of the respective combined responses. For example, because priorities are determined based on contextual information, the most appropriate response to the context of the user may be determined to have a highest priority. The electronic device 1000 according to an embodiment of the disclosure may provide at least one of the plurality of combined responses to the user according to the determined priorities.

The feedback unit 405 according to an embodiment of the disclosure is configured to obtain information of feedback of the user on at least one response in which the first response is combined with the second response. For example, the feedback unit 405 may obtain information of an utterance, a face, a gesture, an emotion, or the like of the user and obtain feedback information based on the obtained information.

According to an embodiment of the disclosure, a generative model used to generate the second response may be modified and refined based on feedback information. For example, based on feedback information, the generative model may be modified and refined to generate the second response more preferred by the user by the generative mode.

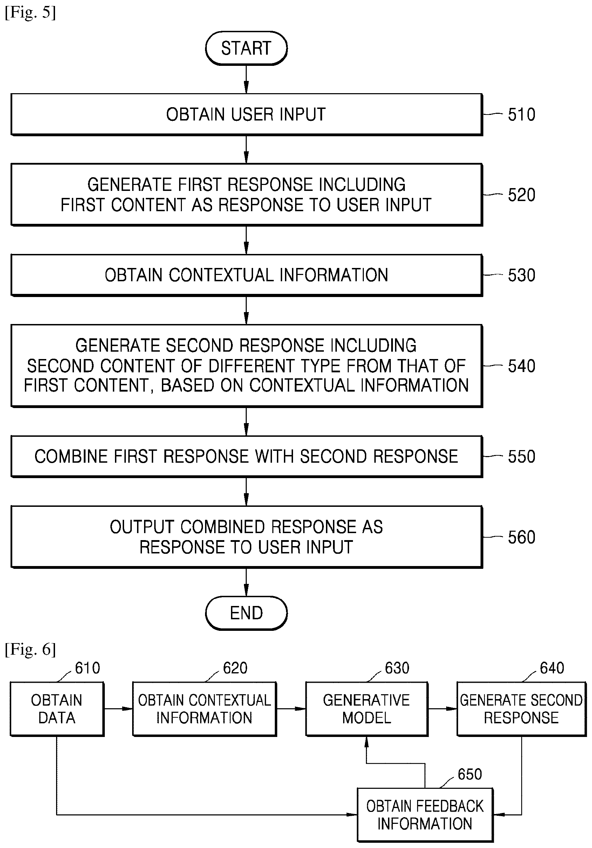

FIG. 5 is a flowchart illustrating a method of outputting a response to a user input according to an embodiment of the disclosure.

Referring to FIG. 5, in operation 510, the electronic device 1000 receives an input from a user. The user input according to an embodiment of the disclosure may be received by the electronic device 1000 via various input methods such as a speech input, a button input, a touch input, a gesture input, and a sensor input. According to an embodiment of the disclosure, the electronic device 1000 may receive the user input via a virtual assistant application providing an interactive interface.

In operation 520, the electronic device 1000 generates the first response including the first content as a response to the user input. The first content of the first response is obtained based on a user's intent by analyzing the input of the user without considering contextual information of the user. For example, when the analyzed user's intent is "information on today's weather", a first content indicating "sunny, bad fine dust level" may be generated as the first response corresponding to "information on today's weather".

In operation 530, the electronic device 1000 obtains contextual information of the user to generate the second response. The contextual information according to an embodiment of the disclosure may include traits, state, surrounding context, and the like of the user obtainable in real time. According to an embodiment of the disclosure, the contextual information used to generate the second response may be continuously updated based on various types of information obtained in real time.

In operation 540, the electronic device 1000 generates the second response including the second content, which is a different type from that of the first content and generated based on the contextual information obtained in operation 530. For example, when the first response includes a text type first content, the second response may include a second content having one of various types different from the text type of the first content, such as a moving image, an image, a user interface, and an audio. Also, the second response may further include a content of the same type as that of the first content in addition to the content of a different type from that of the first content. The second response of the disclosure is generated based on the contextual information of the user obtained in operation 530, in a different manner from that of the first response.

In operation 550, the electronic device 1000 combines the first response with the second response. For example, the electronic device 1000 may process the contents of the first response and the second response to be appropriately arranged and displayed on a display or to be appropriately output via another output device, thereby generating a response in which the first response is combined with the second response.

In operation 560, the electronic device 1000 outputs the combined response obtained in operation 550 as a response to the user input of operation 510.

FIG. 6 is a diagram illustrating an example of generating a second response according to an embodiment of the disclosure.

Referring to FIG. 6, the electronic device 1000 may obtain data including various types of information of the user in operation 610 and obtain contextual information indicating the context of the user from the data in operation 620. For example, the above-described data may include various types of sensor data collected by at least one sensor included in the electronic device 1000. In addition, the contextual information may include various information indicating the context of the user and extracted based on the data, such as information on a surrounding environment of the user, information on a position of the user, information on an emotional state of the user.

In operation 640, the electronic device 1000 may generate the second response via the generative model 630 based on the contextual information obtained in operation 620. For example, the electronic device 1000 may generate the second response including the second content, as a response determined to be appropriate for a current context of the user based on the contextual information.

In addition, according to an embodiment of the disclosure, the electronic device 1000 may output a response to the user input by appropriately combining the second response with the first response, which is generated without considering contextual information.

In operation 650, the electronic device 1000 may output the response in which the first response is combined with the second response as a response to the user input and modify and refine the generative model 630 based on feedback information from the user on the output response. For example, the electronic device 1000 may obtain feedback information from the user on the output response based on various types of data (e.g., sensor data) about the user. The electronic device 1000 may also modify and refine the generative model 630 based on the feedback information to generate the second response appropriate for the user.

According to an embodiment of the disclosure, the electronic device 1000 may determine at least one feature of contextual information based on feedback information. Also, the electronic device 1000 may obtain contextual information to generate the second response based on the determined at least one feature.

Contextual information according to an embodiment of the disclosure may include contextual information of at least one feature corresponding to each context of the user. For example, the contextual information may include contextual information with features respectively indicating different contexts of the user, such as emotional information of the user, noise information of a surrounding environment, and position information of the electronic device 1000.

According to an embodiment of the disclosure, the electronic device 1000 may further obtain contextual information of a different feature from an existing feature from various types of sensor data collected by the at least one sensor based on feedback information.

For example, although emotional information of the user, which may be determined from audio data out of the sensor data collected by the electronic device 1000, may be obtained as the contextual information, noise information of a surrounding environment may be additionally obtained as the contextual information from audio data based on feedback information (e.g., the response output from the electronic device 1000 is not audible due to noise of the surrounding environment).

Thus, because contextual information with a more appropriate feature is obtained from the same sensor data based on feedback information, and a more appropriate second response may be provided to the user.

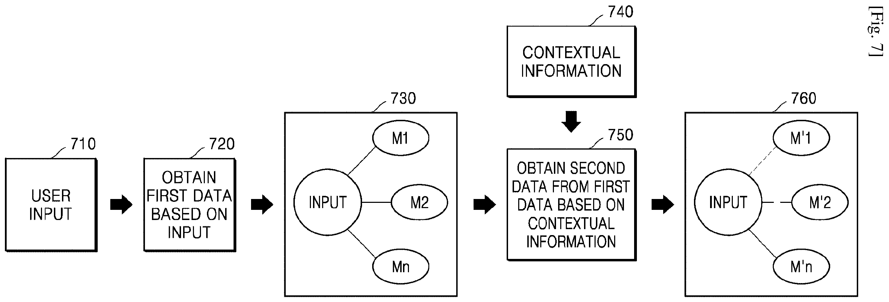

FIG. 7 is a diagram illustrating an example of generating second data to generate a second response according to an embodiment of the disclosure.

Referring to FIG. 7, the electronic device 1000 may receive a user input 710 and obtain first data 730 to generate the first response to the received user input 710 in operation 720. For example, the electronic device 1000 may determine a user's intent by analyzing information of the user input 710 and obtain the first data 730 to generate the first response by searching via various methods based on a determined result.

The first data 730 according to an embodiment of the disclosure is data obtained without considering contextual information of the user, and the first response including the first content may be generated based on the first data 730.

The electronic device 1000 may obtain M1, M2, and Mn, corresponding to the user input 710, as the first data 730 to generate the first response corresponding to the user input 710. For example, when the user input 710 is "How to cook breaded chicken cutlets?," information of cooking ingredients for making a chicken cutlet, calories of respective ingredients, and nutrient profiles thereof may be obtained as the first data 730. According to an embodiment of the disclosure, the first data 730 may include information required to generate the first response directly related to the user input 710 without considering contextual information 740.

The electronic device 1000 may obtain the contextual information 740 about the user. For example, the contextual information 740 about the user may include various information of the user such as diet information, physical condition information (e.g., medical information), and allergy information of the user.

According to an embodiment of the disclosure, the electronic device 1000 may obtain second data 760 from the first data 730 based on the contextual information 740. Also, the electronic device 1000 may generate the second response based on the second data 760. For example, the second data 760 may be obtained by modifying the first data 730 based on the contextual information 740.

According to an embodiment of the disclosure, the second response may be generated by inputting the contextual information 740 and the first data 730 to the above-described generative model used to generate the second response. According to an embodiment of the disclosure, the generative model used to generate the second response may include at least one generative model, e.g., a first generative model for generating the second data 760 from the first data 730 based on the contextual information 740 and a second generative model for generating the second response from the second data 760. Thus, according to an embodiment of the disclosure, the operation of generating the second response performed by the generative model may include an operation of generating the second data 760 from the first data 730 based on the contextual information 740 performed by the first generative model and an operation of generating the second response from the second data 760 performed by the second generative model.

Without being limited to the above-described example, the generative model may include a simple generative model of generating the second data 760 from the first data 730 based on the contextual information 740, and then generating the second response from the second data 760.

In addition, without being limited to the above-described example, the second response may be generated from the contextual information 740 and the first data 730 by various methods.

In operation 750, the electronic device 1000 may obtain the second data 760 from the first data 730 based on the contextual information 740 about the user. The electronic device 1000 may obtain M'1, M'2, M'n, and the like from the second data 760 for generating the second response.

For example, the electronic device 1000 may obtain a method of cooking a chicken cutlet reorganized in consideration of calories based on the diet information of the user or a method of cooking a chicken cutlet reorganized in consideration of allergy information as the second data 760.

Thus, the second response according to an embodiment of the disclosure may be generated based on the second data 760 generated based on the contextual information 740 in a different manner from that of the first response generated based on the first data 730 without considering the contextual information 740.

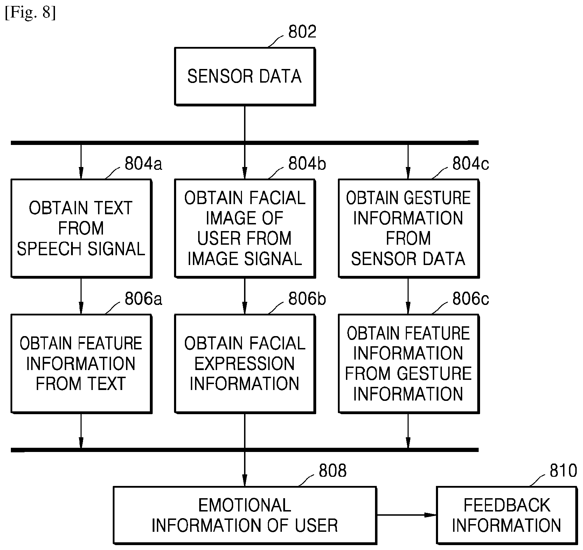

FIG. 8 is a diagram illustrating an example of obtaining feedback information according to an embodiment of the disclosure.

Referring to FIG. 8, the electronic device 1000 may obtain emotional information of the user 808 from sensor data 802 and obtain feedback information 810 from the emotional information of the user 808.

According to an embodiment of the disclosure, emotional information of the user may be obtained based on respective sensor data 802.

According to an embodiment of the disclosure, the electronic device 1000 may obtain a speech signal from the sensor data 802 and obtain text corresponding to the speech signal in operation 804a. Also, the electronic device 1000 may obtain feature information of the text based on the text corresponding to the speech signal in operation 806a. For example, the feature information of the text may include information indicating meaning of the text such as a topic, a keyword, or an intention of the text.

Also, according to an embodiment of the disclosure, the electronic device 1000 may obtain an image signal from the sensor data 802 and obtain a facial image of the user included in the image signal in operation 804b. The electronic device 1000 may also obtain information on a facial expression of the user by analyzing a shape of the face of the user included in the facial image of the user in operation 806b.

According to an embodiment of the disclosure, the electronic device 1000 may also obtain gesture information from the sensor data 802 in operation 804c. For example, gesture information of the user collected by a motion sensor, a touch sensor, or the like may be obtained. The electronic device 1000 may also obtain feature information of a gesture from the gesture information in operation 806c. For example, the electronic device 1000 may determine an intention of the user making a gesture by analyzing the gesture information and obtain information on the determined user's intention as feature information of the gesture. For example, when a gesture of the user making X is detected, feature information of the gesture may include information indicating an opposite opinion.

According to an embodiment of the disclosure, the electronic device 1000 may determine the emotional information of the user 808 based on the feature information of the text, information of the facial expression, and feature information of the gesture respectively obtained in operations 806a, 806b, and 806c. Also, the electronic device 1000 may obtain the feedback information 810 from the emotional information of the user 808. For example, the emotional information of the user may include information on emotions such as satisfaction, dissatisfaction, and anger, and the feedback information 810 including negative, positive, and neutral feedback may be obtained from the emotional information of the user.

According to an embodiment of the disclosure, the generative model used to generate the second response may be modified and refined based on the feedback information 810. Thus, according to an embodiment of the disclosure, a more appropriate second response generated by the generative model modified and refined based on the feedback information 810 may be provided.

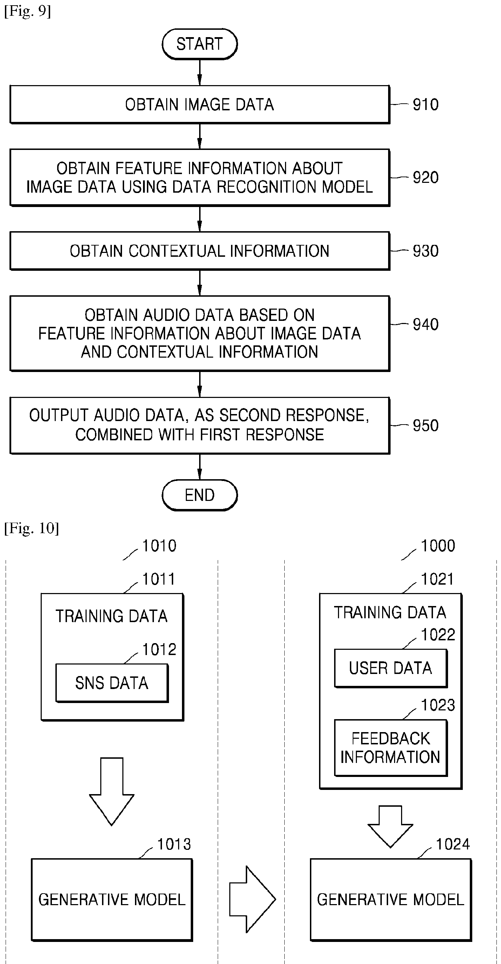

FIG. 9 is a flowchart illustrating a method of generating a second response including a second content according to an embodiment of the disclosure.

Referring to FIG. 9, the electronic device 1000 may generate the second response by obtaining feature information of the first content of the first response, and generating the second content based on the feature information of the first content and contextual information of the user. According to an embodiment of the disclosure, feature information of the first content may be obtained based on a trained model for recognition of certain data.

For example, the electronic device 1000 may obtain image data, as the first content, and generate audio data by the generative model based on the feature information of the image data and contextual information of the user.

According to an example shown in FIG. 9, although audio data, as the second content, may be obtained based on the feature information of the image data, as the first content, the disclosure is not limited thereto, and various types of second contents, such as audio data, image data, user interface, vibration signal, and LED effect, may be obtained based on various types of feature information of the first content.

Hereinafter, in FIG. 9, a method of generating the second response including the second content when the first content is image data and the second content is audio data will be described.

Referring to FIG. 9, in operation 910, the electronic device 1000 may obtain image data. For example, the image data may be image data obtained as the first response.

In operation 920, the electronic device 1000 may recognize an image from the image data obtained in operation 910 using a trained model for recognition of the image, and obtain feature information of the image data as a result thereof.

According to an embodiment of the disclosure, the trained model used to recognize the image data may be a CNN used to classify and detect objects in an image. Without being limited to the above-described example, various types of data recognition models operating based on a neural network may be used to obtain feature information of an image according to an embodiment of the disclosure.

Recognition results of the image data according to an embodiment of the disclosure may include information on an object recognized in the image, information on position of the object recognized in the image, information on motion of the object recognized in the image, and the like. For example, when an image input to the image recognition model is an image of a cat, the recognition result of the image obtained by the image recognition model may include "cat." Thus, feature information of the image may include "cat" as a recognition result of the image.

In operation 930, the electronic device 1000 may obtain contextual information of the user. The contextual information obtained in operation 930 may be used to generate audio data of the second response.

In operation 940, the electronic device 1000 may obtain audio data on the image data based on the feature information of image data obtained in operation 920 and contextual information obtained in operation 930.

For example, the electronic device 1000 may generate audio data based on feature information of image data using the generative model (e.g., GAN) for generation of audio data form image data. Also, the generated audio data may be modified based on the contextual information.

For example, when it is determined that there is a high level of noise in the surrounding environment of the electronic device 1000 based on contextual information, the electronic device 1000 may modify the audio data based on contextual information to raise a volume of the audio data generated based on feature information of image data.

Without being limited to the above-described example, the electronic device 1000 may obtain audio data on image data using various methods based on feature information of the image data obtained as a result of performing image recognition and based on contextual information.

In operation 950, audio data generated according to an embodiment of the disclosure may be a second response combined with the first response to be output as a response to the user input.

FIG. 10 is a diagram illustrating a method of training a generative model to generate a second response, according to an embodiment of the disclosure.

Referring to FIG. 10, a generative model 1013 trained by a server 1010 may be transmitted to the electronic device 1000, and the electronic device 1000 may continuously modify a generative model 1024 according to information collected by the electronic device 1000 based on the generative model 1013 received from the server 1010.

The generative models 1013 and 1024 according to an embodiment of the disclosure are trained models used to generate the second response including the second content, which is a different type from that of the first content of the first response, and generated based on contextual information.

The server 1010 according to an embodiment of the disclosure may train the generative model 1013 based on various training data 1011 collected by the server 1010. For example, the training data 1011 may include social network service (SNS) data 1012 associated with SNS activities of the user.

For example, the server 1010 may obtain various information of the user, such as information of user's preferences, information of a surrounding environment, and user profile information, based on the SNS data 1012, and train the generative model 1013 based on the obtained information.

The server 1010 according to an embodiment of the disclosure may transmit the generative model 1013 trained by the server 1010 to the electronic device 1000. The electronic device 1000 according to an embodiment of the disclosure may further train the generative model 1013 received from the server 1010 based on training data 1021 including various information collected by the electronic device 1000.

The electronic device 1000 according to an embodiment of the disclosure may continuously train the generative model 1013 received from the server 1010 based on the training data 1021 collected by the electronic device 1000, and generate the second response according to the generative model 1013 trained by the electronic device 1000. According to an embodiment of the disclosure, the generative model 1024 may be continuously trained and modified based on the training data 1021 collected by the electronic device 1000 according to the on-device method without being processed by the server 1010.

The training data 1021 collected by the electronic device 1000 may include various user data 1022 collected in relation to the user (e.g., sensor data and input data) and feedback information from the user 1023. For example, the feedback information from the user 1023 may include feedback information from the user on the response provided according to an embodiment of the disclosure. Without being limited to the above-described example, data collected by the electronic device 1000 may include various types of data that may be collected in relation to the user by the electronic device 1000.

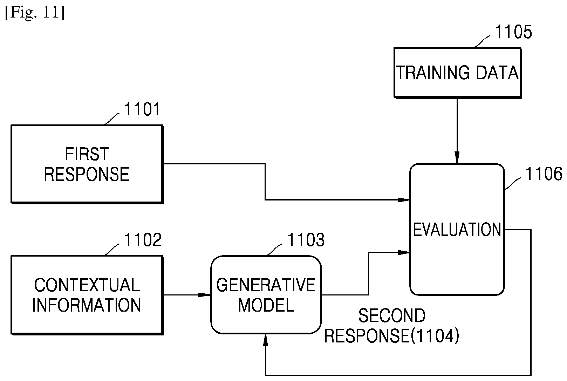

FIG. 11 is a diagram illustrating a method of training a generative model 1103 according to an embodiment of the disclosure.

According to an embodiment of the disclosure, when the electronic device 1000 generates a first response 1101 and a second response 1104, the generative model 1103 may be trained according to an example shown in FIG. 11.

Referring to FIG. 11, the electronic device 1000 may train the generative model 1103 based on training data 1105 collected by the electronic device 1000. The training data 1105 according to an embodiment of the disclosure may correspond to the training data 1011 that may be collected by the electronic device 1000 shown in FIG. 10 as information related to the user. For example, the training data 1105 may include feedback information from the user, sensor data obtained about the user, various types of user data related to the user, and the like.

In addition, the training data 1105 may include contextual information of the user according to an embodiment of the disclosure. Thus, according to an embodiment of the disclosure, the generative model 1103 may be modified to provide a second response 1104 appropriate for the user according to contextual information that continuously changes.

The electronic device 1000, according to an embodiment of the disclosure, may generate the first response 1101 for an input of the user. Also, the electronic device 1000 may generate the second response 1104 for the input of the user including a content of a different type from the content type of the first response 1101 based on contextual information 1102 and generative model 1103.

According to an embodiment of the disclosure, the electronic device 1000 may evaluate 1106 whether the second response 1104 generated by the generative model 1103 is appropriate based on the training data 1105 collected by the electronic device 1000. For example, as the degree of correlation between the training data 1105 and the second response 1104 increases, consistency of the second response 1104 provided according to an embodiment of the disclosure is maintained with information related the user (e.g., contextual information), and thus the second response 1104 may be evaluated as more appropriate.

Therefore, according to an embodiment of the disclosure, the second response 1104 obtained by the generative model 1103 may be evaluated based on the degree of correlation between the second response 1104 and the training data 1105, and the generative model 1103 may be trained according to the evaluation result.

According to an embodiment of the disclosure, the second response 1104 may also be evaluated further based on the first response 1101 in addition to the training data 1105. For example, the second response 1104 may be evaluated based on a degree of correlation among the first response 1101, the training data 1105, and the second response 1104.

The electronic device 1000 according to an embodiment of the disclosure may train the generative model 1103 based on the evaluation result. For example, the electronic device 1000 may modify the generative model 1103 based on the evaluation result to obtain a better evaluation result for the second response 1104 at 1106.

The electronic device 1000 according to an embodiment of the disclosure may continuously train the generative model 1103 based on the degree of correlation between the second response 1104 and the training data 1105 about the user collected by the electronic device 1000. Thus, the electronic device 1000 may obtain a more personalized generative model 1103 than the generative model 1013 of the server 1010 by training the generative model 1103 according to the training data 1105 about the user collected by the electronic device 1000.

As described above, the embodiment of the disclosure shown in FIG. 11 is not limited to the electronic device 1000, and the first response 1101 and the second response 1104 may be generated by the server 1010 shown in FIG. 10 and the generative model 1103 may be trained based on the training data 1011 collected by the server 1010. For example, the first response 1101 and the second response 1104 may be generated by the server 1010 for the user input at a request of the electronic device 1000. Also, the generative model 1013 of the server 1010 may be trained, in the same manner as the generative model 1103 is trained by the electronic device 1000 shown in FIG. 11, according to an evaluation result, based on the training data 1011 collected by the server 1010 and the second response 1104.

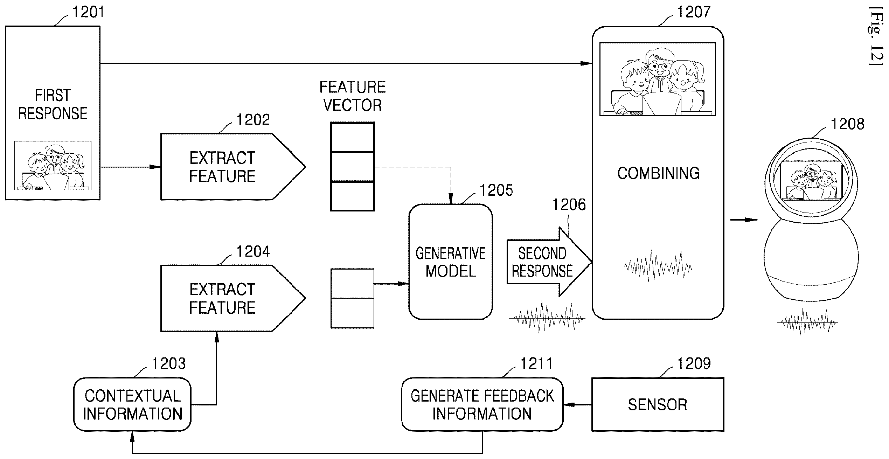

FIG. 12 is a diagram illustrating an example of outputting a response to a user input by an electronic device according to an embodiment of the disclosure.

Referring to FIG. 12, a first response 1201 including image data may be generated for a user input. The first response 1201 may be combined 1207 with a second response 1206 generated by the generative model 1205 and a combined response 1208 may be output.

According to an embodiment of the disclosure, at least one feature vector 1204 for generation of the second response 1206 may be extracted from the contextual information 1203. The at least one feature vector 1204 may include information indicating at least one feature of the contextual information 1203.

For example, the contextual information 1203 may include contextual information of at least one feature indicating each context and at least one feature vector corresponding to each contextual information of the at least one feature may be extracted.

According to an embodiment of the disclosure, the electronic device 1000 may extract at least one feature vector 1204 from the contextual information 1203 and generate the second response 1206 by inputting the extracted feature vector 1204 to the generative model 1205.

According to an embodiment of the disclosure, the feature vector may be determined by relative position information determined according to at least one feature indicated by contextual information in a graph in which one or more cluster, which are classified according to preset criteria, are distributed. For example, a feature vector value may be determined such that a center of a cluster including a feature more similar to contextual information is located to be closer to a position of the feature vector. Without being limited to the above-described example, the feature vector for the contextual information 1203 may include various forms of information indicating features of contextual information.

Also, according to an embodiment of the disclosure, the electronic device 1000 may further extract feature information 1202 of content included in the first response 1201 and input the extracted result to the generative model 1205. Thus, the electronic device 1000 may generate a second response 1206 highly related to the first response 1201 in addition to the contextual information 1203.

The second response 1206 according to an embodiment of the disclosure may include audio data, which is a content of a different type from the content of the first response 1201.

According to an embodiment of the disclosure, the electronic device 1000 may generate feedback information 1211 based on data obtained by the sensor 1209, and update_the contextual information 1203 based on feedback information. The data obtained by the sensor 1209 may include sensor data for determining reaction to or feedback on the response 1208 output according to an embodiment of the disclosure.

The image data and audio data shown in FIG. 12, contents of the first response 1201 and the second response 1206 respectively, are only examples and are not limited thereto, and the first response 1201 and the second response 1206 according to an embodiment of the disclosure may include various types of contents.

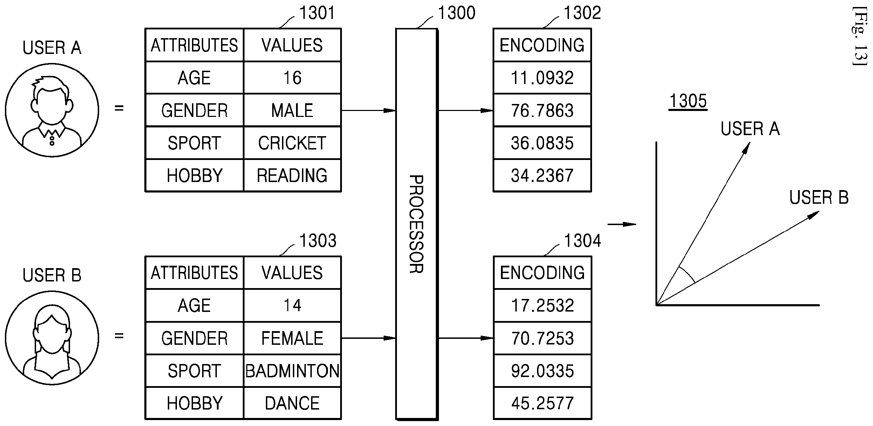

FIG. 13 is a diagram illustrating an example of acquiring contextual information of a user based on user profile information according to an embodiment of the disclosure.

Referring to FIG. 13, profile information 1301 and 1303 of Users A and B may be converted (e.g., encoded) into feature vectors 1302 and 1304, respectively, by the processor 1300. According to an embodiment of the disclosure, the feature vector may be determined according to relative position information determined in accordance with characteristics of predetermined data. The feature vectors 1302 and 1304 of the Users A and B may be expressed as shown in a graph 1305.

According to an embodiment of the disclosure, the feature vector values converted based on profile information may be used as, contextual information, to generate a second response. According to an embodiment of the disclosure, the electronic device 1000 may generate the second response 1206 by inputting the feature vector values converted based on profile information to the generative model 1205 shown in FIG. 12.

Without being limited to the above-described example, user profile information may be converted into various forms of information indicating of contextual information of the user, and the second response 1206 may be generated based on the converted information.

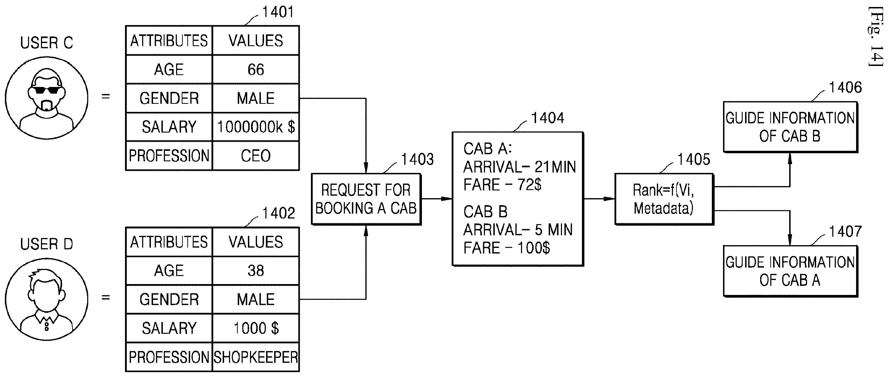

FIG. 14 is a diagram illustrating an example of generating a second response based on user profile information according to an embodiment of the disclosure.

Referring to FIG. 14, second responses including different contents, which vary according to use profile information, may be provided for the same input, and responses respectively generated based on the second responses may be provided to respective users. The profile information, as contextual information according to an embodiment of the disclosure, may be used to generate the second response.

According to an embodiment of the disclosure, for a user input requesting for "Book a cab" 1403, first data 1404 related to an available cab may indicate that Cab A is expected to take 21 minutes to reach a destination with a fare of 72 $. Also, Cab B is expected to take 5 minutes to reach the destination with a fare of 100 $. For example, because Cab A, unlike Cab B, provides a carpool-type cab service, a lower-fare service may be provided although it takes longer to arrive at the destination.

According to an embodiment of the disclosure, when the user input 1403 requesting for a cab is received from User C, the electronic device 1000 may generate a first response based on booking information of Cab A and Cab B included in the first data 1404 (Metadata).

According to an embodiment of the disclosure, priorities 1405 (Rank) of Cab A and Cab B included in the first data 1404 (metadata) may be determined based on profile information 1401 (Vi) about User C, which is used to provide guide information of Cab A 1406 or guide information of Cab B. The priorities 1405 (Rank) may be determined by a predetermined function (f). For example, the electronic device 1000 may determine that the priority of Cab B is higher, due to a less time to arrive at the destination despite a higher fare, based on at least one of salary information, age information, or profession information included in profile information of User C. Thus, the electronic device 1000 may generate a second response including information on how to book Cab B based on the profile information of User C.

Also, the second response according to an embodiment of the disclosure may further include a moving image, an audio, a visual effect, a user interface, or the like, as a second content of a different type from text, which is the content type of the first response. For example, the second response may further include a user interface of an application providing a cab booking serve for Cab B and installed in the electronic device 1000.

In addition, according to an embodiment of the disclosure, the electronic device 1000 may combine the first response with the second response and provide a combined response to User C. For example, the electronic device 1000 may combine the first response with the second response such that booking information on Cab A and Cab B is displayed based on the first response and the user interface providing a cab booking service for Cab B is simultaneously displayed based on the second response. The combined response may be provided to User C.

Meanwhile, according to an embodiment of the disclosure, when a user input 1403 requesting for booking a cab is received from User D, the electronic device 1000 may determine priorities 1405 of Cab A and Cab B included in the first data 1404 (metadata) based on profile information 1402 (Vi) about User D. In the case of User D, in contrast to User C, the electronic device 1000 may determine that the priority of Cab A is higher, due to a lower fare despite a longer time to arrive at the destination, based on at least one of salary information, age information, or profession information included in the profile information of User D. Thus, the electronic device 1000 may generate a second response including information on how to book Cab A based on profile information of User D.

Also, according to an embodiment of the disclosure, the electronic device 1000 may combine the first response with the second response such that booking information on Cab A and Cab B is displayed based on the first response and the user interface providing a cab booking service for Cab A is simultaneously displayed based on the second response. The combined response may be provided to User D.

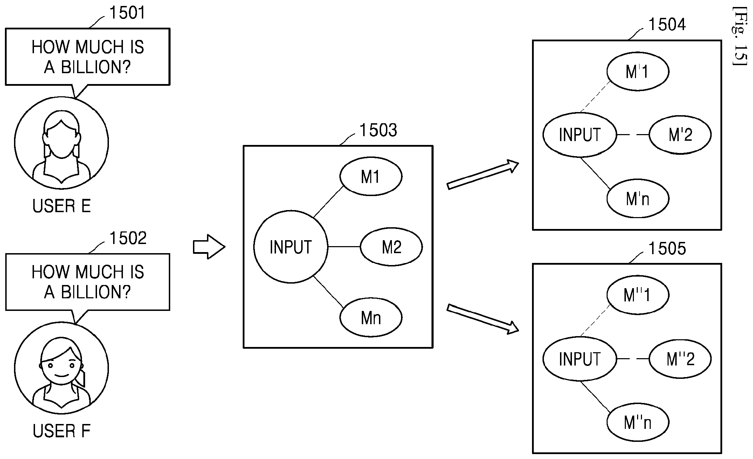

FIG. 15 is a diagram illustrating an example of providing a response to a user input according to an embodiment of the disclosure.

Referring to FIG. 15, second responses including different contents, which vary according to user profile information, may be provided for the same input, and responses respectively generated based on the second responses may be provided to respective users.

According to an embodiment of the disclosure, when a user input of "How much is a billion?" 1501 and 1502 is received from User E or User F, a first response may be generated based on first data 1503 generated based on the user input. The first response according to an embodiment of the disclosure may be generated based on the first data 1503 generated based on the user input without considering user profile information.

According to an embodiment of the disclosure, second data 1504 and 1505 may be generated from the first data 1503 based on various types of contextual information of each user such as profile information, preference information, and SNS activity information. Thus, second responses respectively generated based on the second data 1504 and 1505 according to an embodiment of the disclosure may include personalized responses in accordance with the contexts of the users.

For example, when User E is a student, the second data 1504 of User E may include data for generating a response to the user input 1501 based on interests, knowledge levels, or the like of User E. Also, when User F is a kid, the second data 1505 of User F may include data for generating a response to the user input 1502 based on interests, knowledge levels, or the like of User F.

Thus, the second responses for inputs of Users E and F may be generated to suit the interests, knowledge levels, or the like of the users. For example, the second response to User E may include a response "A billion corresponds to 10⁹ or ten million rupees". Also, the second response to User F may include a response "A billion is a tremendous number and a large pool may be filled with a billion balls".

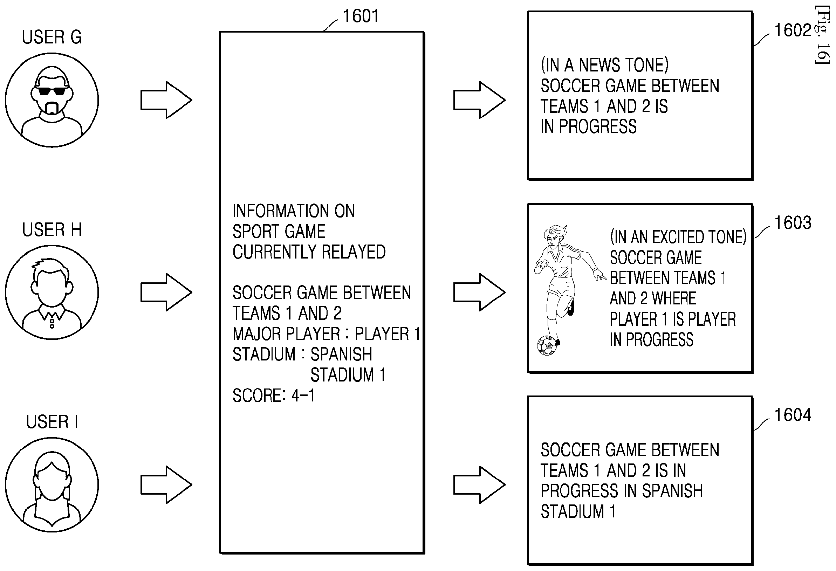

FIG. 16 is a diagram illustrating an example of providing a response to a user input according to an embodiment of the disclosure.

Referring to FIG. 16, second responses including different contents, which vary according to user profile information, may be provided for the same input of "Show me a sport content", and responses respectively generated based on the second responses may be provided to respective users.

Profile information of User G according to an embodiment of the disclosure may include news, as an interest, and home, as a current position. Also, profile information of User H may include soccer, particularly Player 1, Team 2, as an interest, and home, as a current position. In addition, profile information of User I may include travel and sport, as interests, and Hotel A in a city center, as a current position.

According to an embodiment of the disclosure, a first response may be generated based on first data 1601 including information on sport contents that may be provided by the electronic device 1000 in response to the user input. For example, the first data 1601 may include information on a sport game that is currently relayed and may be provided by the electronic device 1000.

According to an embodiment of the disclosure, the electronic device 1000 may also generate different second data 1602, 1603, and 1604 from the first data 1601 for respective users based on the above-described user profile information.

For example, the electronic device 1000 may determine that User G is not interested in sports but only interested in sport news and generate audio data including a content, User G might be interested in, indicating that a soccer game between Team 1 and Team 2 is in progress, as second data 1602 based on the first data 1601. The audio data of the second data 1602 may include a voice reading the above content, in a news tone, by considering a taste of User G.

In addition, for example, the electronic device 1000 may generate the second data 1603 including audio data based on the first data 1601 by considering features that User H is interested in soccer games, Player 1, and Team 2. The audio data of the second data 1603 for User H may include a voice reading a content that a soccer game between Teams 1 and 2 where Player 1 is playing is in progress, in an excited tone. The second data 1603 may include a clip image, a still image, or the like of Player 1.

For example, the electronic device 1000 may also generate the second data 1604 including audio data based on the first data 1601 by considering features that User I is interested in travel. The audio data of the second data 1604 may include a voice reading a content that a soccer game between Teams 1 and 2 is in progress in Spanish stadium 1. The second data 1604 may further include information on a position, an image, or the like of Spanish stadium 1.

According to an embodiment of the disclosure, second responses for the respective users may be generated respectively based on the second data 1602, 1603, and 1604 which are generated for the users. Also, responses for the respective user inputs may be provided based on the respective second responses. Thus, according to an embodiment of the disclosure, different responses may be provided for the same user input, in accordance with user profile information.

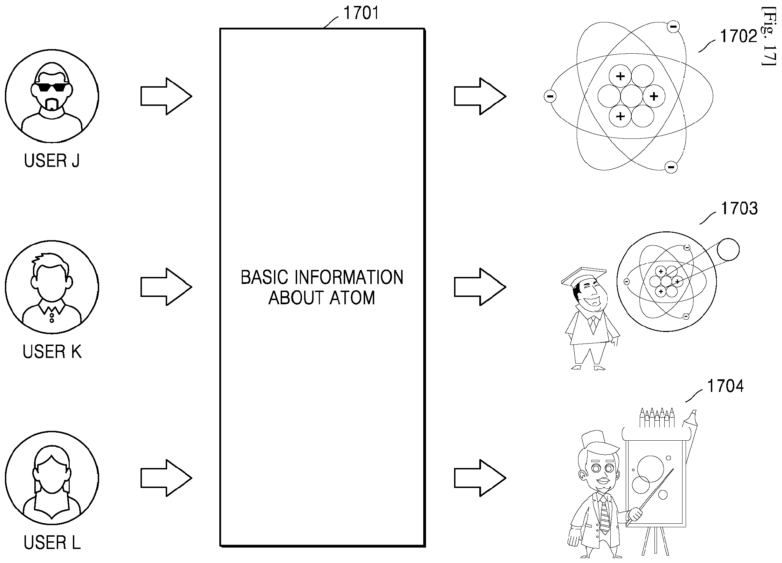

FIG. 17 is a diagram illustrating an example of providing a response to a user input according to an embodiment of the disclosure.

Referring to FIG. 17, second responses including different contents, which vary according to user profile information, may be provided for the same input of "What is an atom", and responses respectively generated based on the second responses may be provided to respective users.

According to an embodiment of the disclosure, profile information of User J may include information indicating that User J has a basic level of scientific knowledge and prefers a simple user interface. Also, profile information of User K may include information indicating that User K likes science and has a scientific knowledge level of middle school students. Also, profile information of User L may include information indicating that User L is a kid interested in cartoons and has a scientific knowledge level of elementary school students.

According to an embodiment of the disclosure, a first response may be generated based on first data 1701 including basic information of atoms that can be provided by the electronic device 1000 in response to the user input. For example, the first data 1701 may include information of the meaning of atom that may be found in an encyclopedia.

Also, according to an embodiment of the disclosure, the electronic device 1000 may generate different second data 1702, 1703, and 1704 for respective users from the first data 1701 based on the above-described user profile information.

For example, the electronic device 1000 may include the second data 1702 including image data and audio data briefly explaining about atoms by considering that User J has a basic level of scientific knowledge and prefers a simple user interface.

Also, the electronic device 1000 may include the second data 1703 including image data and audio data explaining atoms suitable for middle school students by considering that User K likes science and has a scientific knowledge level of middle school students.

Also, the electronic device 1000 may include the second data 1704 including image data and audio data explaining atoms using cartoon characters suitable for elementary school students by considering that User L is a kid interested in cartoons and has a scientific knowledge level of elementary school students.

According to an embodiment of the disclosure, second responses for respective users may be generated respectively based on the second data 1702, 1703, and 1704 which are generated for the users. Also, responses for the respective user inputs may be provided based on the respective second responses. Thus, according to an embodiment of the disclosure, different responses may be provided for the same user input, in accordance with user profile information.

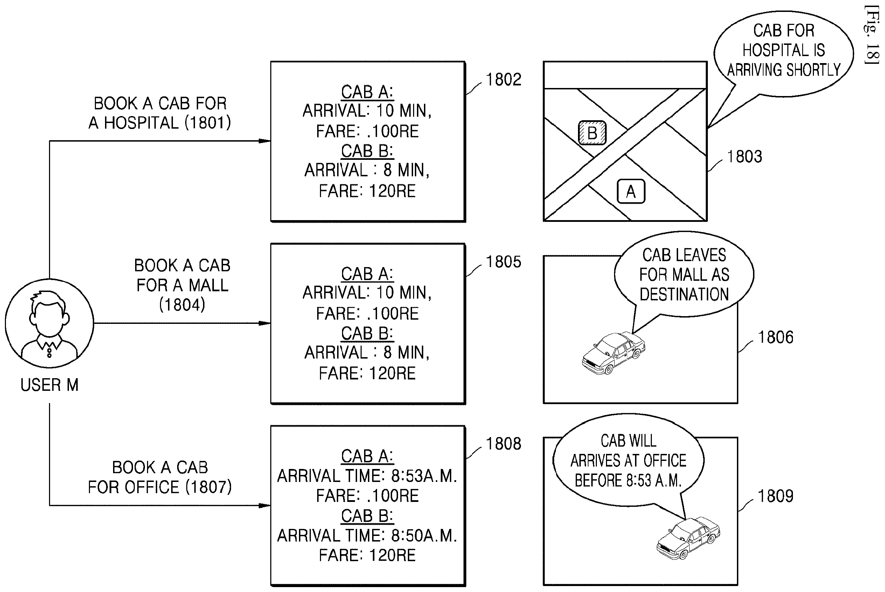

FIG. 18 is a diagram illustrating an example of providing a response to user input according to an embodiment of the disclosure.

Referring to FIG. 18, different responses may be provided according to contextual information for an input of User M.

According to an embodiment of the disclosure, profile information of contextual information of User M may include information indicating that a preferred cab service provider is Cab A, information indicating that User M prefers a lower fare to arriving earlier, and information of a time that User M gets to work. Also, the contextual information of User M may include information on emergency.

According to an embodiment of the disclosure, the electronic device 1000 may receive an input of "Book a cab for a hospital 1801" from User M. First data 1802 according to an embodiment of the disclosure may be generated based on information input by User M. For example, the electronic device 1000 may generate the first data 1802 based on, "hospital" that is destination information obtained from the user input.

The first data 1802 according to an embodiment of the disclosure may include booking information of Cab A and Cab B. However, when contextual information according to an embodiment of the disclosure includes information indicating an emergency situation, the electronic device 1000 may generate second data 1803 from the first data 1802 based on the contextual information. For example, the electronic device 1000 may generate the second data 1803 including a user interface providing a booking service for Cab B which arrives earlier although User M does not prefer expensive Cab B. Also, the second data 1803 may further include an audio guidance of "A cab toward the hospital is arriving shortly" related to the booking service for Cab B.

According to an embodiment of the disclosure, the first response generated based on the first data 1802 is combined with a second response generated based on the second data 1803, and the combined response may be provided to User M. User M may input additional information to the electronic device 1000 for booking a cab based on the combined response of the first response and the second response.

According to an embodiment of the disclosure, the electronic device 1000 may receive an input of "Book a cab for a mall 1804" from User M. First data 1805 according to an embodiment of the disclosure may be generated based on information input by User M. For example, the electronic device 1000 may generate first data 1805 based on "mall" that is destination information obtained from the user input.

The first data 1805 according to an embodiment of the disclosure may include booking information of Cab A and Cab B. The electronic device 1000 may generate second data 1806 from the first data 1805 based on profile information of User M according to an embodiment of the disclosure. For example, the electronic device 1000 may generate second data 1806 including a user interface providing a booking service for Cab A which provides a service with a lower fare and is preferred by User M. Also, the second data 1806 may further include an audio guidance of "A cab is leaving for the mall as the destination" related to the booking service for Cab A.

According to an embodiment of the disclosure, the first response generated based on the first data 1805 is combined with a second response generated based on the second data 1806, and the combined response may be provided to User M. User M may input additional information to the electronic device 1000 for booking a cab based on the combined response of the first response and the second response.

According to an embodiment of the disclosure, the electronic device 1000 may receive an input of "Book a cab for the office 1807" form User M. First data 1808 according to an embodiment of the disclosure may be generated based on information input by User M. For example, the electronic device 1000 may generate the first data 1808 based on, "office" that is destination information obtained from the user input.

The first data 1808 according to an embodiment of the disclosure may include booking information of Cab A and Cab B. The electronic device 1000 may generate second data 1809 from the first data 1808 based on profile information of User M according to an embodiment of the disclosure. For example, the electronic device 1000 may generate second data 1809 including a user interface providing a booking service for Cab A which provides a service with a lower fare, arrives at the office before 9:00 a.m., and is preferred by User M. Also, the second data 1809 may further include an audio guidance of "A cab will arrive at the office before 8:53 a.m." related to the booking service for Cab A.

According to an embodiment of the disclosure, the first response generated based on the first data 1808 is combined with a second response generated based on the second data 1809, and the combined response may be provided to User M. User M may input additional information to the electronic device 1000 for booking a cab based on the combined response of the first response and the second response.

According to an embodiment of the disclosure, better user experience may be provided by providing additional responses generated based on contextual information as well as a basic response to a user input.

According to an embodiment of the disclosure, more appropriate responses may be provided to users by providing additional responses generated based on contextual information as well as a basic response to a user input.

The embodiments of the disclosure may be embodied as a computer-readable recording medium, e.g., a program module to be executed in computers, which includes computer-readable instructions. The computer-readable recording medium may include any usable medium that may be accessed by computers, volatile and non-volatile medium, and detachable and non-detachable medium. Also, the computer-readable recording medium may include a computer storage medium and a communication medium. The computer storage medium includes all volatile and non-volatile media, and detachable and non-detachable media which are technically implemented to store information including computer-readable instructions, data structures, program modules or other data. The communication medium includes computer-readable instructions, a data structure, or a program module, and includes other information transmission media.

Also, throughout the specification, the "unit" may be a hardware component such as a processor or a circuit and/or a software component executed by the hardware such as the processor.

The above description of the disclosure is provided for the purpose of illustration, and it would be understood by those skilled in the art that various changes and modifications may be made without changing technical conception and essential features of the disclosure. Thus, it is clear that the above-described embodiments of the disclosure are illustrative in all aspects and do not limit the disclosure. For example, each component described to be of a single type may be implemented in a distributed manner. Likewise, components described to be distributed may be implemented in a combined manner.

## Claims

1. A method performed by an electronic device, comprising:
receiving (510) a user input from a user; and
in response to receiving the user input, **characterized in**,
generating (520) a first response comprising first content of a first type based on the user input irrespective of contextual information of the user,
obtaining (530) contextual information of the user of a context which changes continuously in real time, and wherein there is delayed updating of the contextual information of the user,
generating (540) a second response comprising second content of a second type based on the contextual information, the second type of the second content being different from the first type of the first content, wherein the first type of the first content comprises at least one of text, a moving picture, an image, or audio content, and wherein the second type of the second content comprises at least one of text, a moving picture, an image, audio content, a light-emitting diode, LED, output, a vibration output, a visual effect, an audible effect, or a user interface,
generating a combined response (550) based on the first response and the second response, and
outputting (560) the combined response by outputting the first response together with the second response.

2. The method of claim 1, further comprising, in response to the user input, obtaining first data,
wherein the first response is generated based on the first data, and
wherein the second response is generated based on second data obtained by modifying the first data based on the contextual information.

3. The method of claim 1, further comprising inputting the contextual information into a generative model to generate the second response.

4. The method of claim 3, further comprising training the generative model based on training data,
wherein the training data comprises information related to the user that was collected by the electronic device, and
wherein the generative model is trained based on correlation between the training data and the second response.

5. The method of claim 1, wherein the generating of the second response comprises:
obtaining feature information of the first content; and
generating the second response comprising the second content based on the feature information and the contextual information.

6. The method of claim 1,
wherein the contextual information comprises at least one feature corresponding to each context of the user,
wherein the at least one feature of the contextual information is determined based on feedback information from the user with respect to the combined response, and
wherein the contextual information is obtained based on the determined at least one feature.

7. An electronic device (1000) comprising:
an input device (1100) configured to receive (510) a user input from a user;
at least one processor (1300) configured to:
in response to the user input, generate (520) a first response comprising first content of a first type based on the user input irrespective of contextual information of the user, obtain (530) contextual information of the user of a context which continuously changes in real time, and wherein there is delayed updating of the contextual information of the user,
generate (540) a second response comprising second content of a second type based on the contextual information, the second type of the second content being different from the first type of the first content, wherein the first type of the first content comprises at least one of text, a moving picture, an image, or an audio, and wherein the second type of the second content comprises at least one of text, a moving picture, an image, an audio, a light-emitting diode, LED, output, a vibration output, a visual or audible effect, or a user interface,
generate a combined response (550) based on the first response and the second response; and
an output device (1200) configured to output the combined response by outputting the first response together with the second response.

8. The electronic device (1000) of claim 7,
wherein the first response is generated based on first data obtained based on the user input, and
wherein the second response is generated based on second data obtained by modifying the first data based on the contextual information.

9. The electronic device (1000) of claim 7,
wherein the second response is generated by inputting the contextual information to a generative model.

10. The electronic device (1000) of claim 9,
wherein the at least one processor (1300) is further configured to obtain training data comprising information related to the user collected by the electronic device as information used to train the generative model,
wherein the generative model is trained based on correlation between the training data and the second response.

11. The electronic device of claim 7, wherein the at least one processor (1300) is further configured to:
obtain feature information of the first content, and
generate the second response comprising the second content based on the feature information of the first content and the contextual information.

12. The electronic device (1000) of claim 7,
wherein the contextual information comprises at least one feature corresponding to each context of the user, and
wherein the at least one feature is determined based on feedback information from the user on the combined response, and the contextual information is obtained based on the at least one feature.

13. A computer-readable storage medium configured to store one or more computer programs including instructions that, when executed by at least one processor (1300), cause the at least one processor (1300) to perform the method of any one of claims 1-6.

## Patentansprüche

1. Verfahren, das von einer elektronischen Vorrichtung durchgeführt wird, umfassend:
Empfangen (510) einer Benutzereingabe von einem Benutzer; und
als Reaktion auf das Empfangen der Benutzereingabe, **gekennzeichnet durch**
Erzeugen (520) einer ersten Antwort, die einen ersten Inhalt eines ersten Typs umfasst, basierend auf der Benutzereingabe, unabhängig von Kontextinformationen des Benutzers, Erhalten (530) von Kontextinformationen des Benutzers eines Kontextes, der sich kontinuierlich in Echtzeit ändert, und wobei eine verzögerte Aktualisierung der Kontextinformationen des Benutzers erfolgt,
Erzeugen (540) einer zweiten Antwort, die einen zweiten Inhalt eines zweiten Typs umfasst, basierend auf den Kontextinformationen, wobei sich der zweite Typ des zweiten Inhalts von dem ersten Typ des ersten Inhalts unterscheidet, wobei der erste Typ des ersten Inhalts mindestens eines von einem Text, einem Bewegtbild, einem Bild oder einem Audioinhalt umfasst und wobei der zweite Typ des zweiten Inhalts mindestens eines von einem Text, einem Bewegtbild, einem Bild, einem Audioinhalt, einer Ausgabe einer Leuchtdiode, LED, einer Vibrationsausgabe, einem visuellen Effekt, einem akustischen Effekt oder einer Benutzerschnittstelle umfasst,
Erzeugen einer kombinierten Antwort (550) basierend auf der ersten Antwort und der zweiten Antwort, und
Ausgeben (560) der kombinierten Antwort durch Ausgeben der ersten Antwort zusammen mit der zweiten Antwort.

2. Verfahren nach Anspruch 1, ferner umfassend, als Reaktion auf die Benutzereingabe, Erhalten erster Daten,
wobei die erste Antwort basierend auf den ersten Daten erzeugt wird, und
wobei die zweite Antwort basierend auf zweiten Daten erzeugt wird, die durch Modifizieren der ersten Daten basierend auf den Kontextinformationen erhalten werden.

3. Verfahren nach Anspruch 1, ferner umfassend Eingeben der Kontextinformationen in ein generatives Modell, um die zweite Antwort zu erzeugen.

4. Verfahren nach Anspruch 3, ferner umfassend Trainieren des generativen Modells basierend auf Trainingsdaten,
wobei die Trainingsdaten benutzerbezogene Informationen umfassen, die von der elektronischen Vorrichtung gesammelt wurden, und
wobei das generative Modell basierend auf einer Korrelation zwischen den Trainingsdaten und der zweiten Antwort trainiert wird.

5. Verfahren nach Anspruch 1, wobei das Erzeugen der zweiten Antwort Folgendes umfasst:
Erhalten von Merkmalsinformationen des ersten Inhalts; und
Erzeugen der zweiten Antwort, die den zweiten Inhalt umfasst, basierend auf den Merkmalsinformationen und den Kontextinformationen.

6. Verfahren nach Anspruch 1,
wobei die Kontextinformationen mindestens ein Merkmal umfassen, das jedem Kontext des Benutzers entspricht,
wobei das mindestens eine Merkmal der Kontextinformationen basierend auf Rückkopplungsinformationen von dem Benutzer in Bezug auf die kombinierte Antwort bestimmt wird, und
wobei die Kontextinformationen basierend auf dem bestimmten mindestens einen Merkmal erhalten werden.

7. Elektronische Vorrichtung (1000), umfassend:
eine Eingabevorrichtung (1100), die zum Empfangen (510) einer Benutzereingabe von einem Benutzer konfiguriert ist;
mindestens einen Prozessor (1300), der konfiguriert ist zum:
als Reaktion auf die Benutzereingabe, Erzeugen (520) einer ersten Antwort, die einen ersten Inhalt eines ersten Typs umfasst, basierend auf der Benutzereingabe, unabhängig von Kontextinformationen des Benutzers, Erhalten (530) von Kontextinformationen des Benutzers eines Kontextes, der sich kontinuierlich in Echtzeit ändert, und wobei eine verzögerte Aktualisierung der Kontextinformationen des Benutzers erfolgt,
Erzeugen (540) einer zweiten Antwort, die einen zweiten Inhalt eines zweiten Typs umfasst, basierend auf den Kontextinformationen, wobei sich der zweite Typ des zweiten Inhalts von dem ersten Typ des ersten Inhalts unterscheidet, wobei der erste Typ des ersten Inhalts mindestens eines von einem Text, einem Bewegtbild, einem Bild oder einem Audio umfasst und wobei der zweite Typ des zweiten Inhalts mindestens eines von einem Text, einem Bewegtbild, einem Bild, einem Audio, einer Ausgabe einer Leuchtdiode, LED, einer Vibrationsausgabe, einem visuellen oder akustischen Effekt oder einer Benutzerschnittstelle umfasst,
Erzeugen einer kombinierten Antwort (550) basierend auf der ersten Antwort und der zweiten Antwort; und
eine Ausgabevorrichtung (1200), die zum Ausgeben der kombinierten Antwort durch Ausgeben der ersten Antwort zusammen mit der zweiten Antwort konfiguriert ist.

8. Elektronische Vorrichtung (1000) nach Anspruch 7,
wobei die erste Antwort basierend auf ersten Daten erzeugt wird, die basierend auf der Benutzereingabe erhalten werden, und
wobei die zweite Antwort basierend auf zweiten Daten erzeugt wird, die durch Modifizieren der ersten Daten basierend auf den Kontextinformationen erhalten werden.

9. Elektronische Vorrichtung (1000) nach Anspruch 7,
wobei die zweite Antwort durch Eingeben der Kontextinformationen in ein generatives Modell erzeugt wird.

10. Elektronische Vorrichtung (1000) nach Anspruch 9,
wobei der mindestens eine Prozessor (1300) ferner konfiguriert ist, um Trainingsdaten zu erhalten, die benutzerbezogene Informationen umfassen, die von der elektronischen Vorrichtung als Informationen gesammelt werden, die zum Trainieren des generativen Modells verwendet werden,
wobei das generative Modell basierend auf einer Korrelation zwischen den Trainingsdaten und der zweiten Antwort trainiert wird.

11. Elektronische Vorrichtung nach Anspruch 7, wobei der mindestens eine Prozessor (1300) ferner konfiguriert ist zum:
Erhalten von Merkmalsinformationen des ersten Inhalts, und
Erzeugen der zweiten Antwort, die den zweiten Inhalt umfasst, basierend auf den Merkmalsinformationen des ersten Inhalts und den Kontextinformationen.

12. Elektronische Vorrichtung (1000) nach Anspruch 7,
wobei die Kontextinformationen mindestens ein Merkmal umfassen, das jedem Kontext des Benutzers entspricht, und
wobei das mindestens eine Merkmal basierend auf Rückkopplungsinformationen von dem Benutzer über die kombinierte Antwort bestimmt wird und die Kontextinformationen basierend auf dem mindestens einen Merkmal erhalten werden.

13. Computerlesbares Speichermedium, das konfiguriert ist, um ein oder mehrere Computerprogramme zu speichern, die Anweisungen beinhalten, die bei Ausführung durch mindestens einen Prozessor (1300) den mindestens einen Prozessor (1300) veranlassen, das Verfahren nach einem der Ansprüche 1-6 durchzuführen.

## Revendications

1. Procédé exécuté par un dispositif électronique, comprenant :
recevoir (510) une entrée d'utilisateur de la part d'un utilisateur ; et
en réponse à la réception de l'entrée d'utilisateur, **caractérisé par** le fait de,
générer (520) une première réponse comprenant un premier contenu d'un premier type basé sur l'entrée d'utilisateur indépendamment des informations contextuelles de l'utilisateur,
obtenir (530) des informations contextuelles de l'utilisateur d'un contexte qui change continuellement en temps réel, et dans lequel il y a une mise à jour différée des informations contextuelles de l'utilisateur,
générer (540) une deuxième réponse comprenant un deuxième contenu d'un deuxième type basé sur les informations contextuelles, le deuxième type du deuxième contenu étant différent du premier type du premier contenu, dans lequel le premier type du premier contenu comprend au moins un d'un texte, d'une image animée, d'une image ou d'un contenu audio, et dans lequel le deuxième type du deuxième contenu comprend au moins un d'un texte, d'une image animée, d'une image, d'un contenu audio, d'une sortie de diode électroluminescente, LED, d'une sortie de vibration, d'un effet visuel, d'un effet sonore ou d'une interface utilisateur,
générer une réponse combinée (550) en se basant sur la première réponse et la deuxième réponse, et
produire (560) la réponse combinée en produisant la première réponse en même temps que la deuxième réponse.

2. Procédé de la revendication 1, comprenant en outre, en réponse à l'entrée d'utilisateur, l'obtention des premières données,
dans lequel la première réponse est générée en se basant sur les premières données, et
dans lequel la deuxième réponse est générée en se basant sur les deuxièmes données obtenues en modifiant les premières données sur la base des informations contextuelles.

3. Procédé de la revendication 1, comprenant en outre la saisie des informations contextuelles dans un modèle génératif pour générer la deuxième réponse.

4. Procédé de la revendication 3, comprenant en outre l'entraînement du modèle génératif en se basant sur des données d'entraînement,
dans lequel les données d'entraînement comprennent des informations relatives à l'utilisateur qui ont été collectées par le dispositif électronique, et
dans lequel le modèle génératif est entraîné en se basant sur la corrélation entre les données d'entraînement et la deuxième réponse.

5. Procédé de la revendication 1, dans lequel la génération de la deuxième réponse comprend :
obtenir des informations sur les caractéristiques du premier contenu ; et
générer la deuxième réponse comprenant le deuxième contenu en se basant sur les informations sur les caractéristiques et les informations contextuelles.

6. Procédé de la revendication 1,
dans lequel les informations contextuelles comprennent au moins une caractéristique correspondant à chaque contexte de l'utilisateur,
dans lequel l'au moins une caractéristique des informations contextuelles est déterminée sur la base des informations de retour de l'utilisateur en ce qui concerne la réponse combinée, et
dans lequel les informations contextuelles sont obtenues sur la base d'au moins une caractéristique déterminée.

7. Dispositif électronique (1000), comprenant :
un dispositif d'entrée (1100) configuré pour recevoir (510) une entrée d'utilisateur de la part d'un utilisateur ;
au moins un processeur (1300) configuré pour :
en réponse à l'entrée d'utilisateur, générer (520) une première réponse comprenant un premier contenu d'un premier type basé sur l'entrée d'utilisateur indépendamment des informations contextuelles de l'utilisateur, obtenir (530) des informations contextuelles de l'utilisateur d'un contexte qui change continuellement en temps réel, et dans lequel il y a une mise à jour différée des informations contextuelles de l'utilisateur,
générer (540) une deuxième réponse comprenant un deuxième contenu d'un deuxième type basé sur les informations contextuelles, le deuxième type du deuxième contenu étant différent du premier type du premier contenu, dans lequel le premier type du premier contenu comprend au moins un d'un texte, d'une image animée, d'une image ou d'un audio, et dans lequel le deuxième type du deuxième contenu comprend au moins un d'un texte, d'une image animée, d'une image, d'un audio, d'une sortie de diode électroluminescente, LED, d'une sortie de vibration, d'un effet visuel ou sonore ou d'une interface utilisateur,
générer une réponse combinée (550) en se basant sur la première réponse et la deuxième réponse ; et
un dispositif de sortie (1200) configuré pour émettre la réponse combinée en produisant la première réponse en même temps que la deuxième réponse.

8. Dispositif électronique (1000) de la revendication 7,
dans lequel la première réponse est générée sur la base des premières données obtenues à partir de l'entrée d'utilisateur, et
dans lequel la deuxième réponse est générée en se basant sur les deuxièmes données obtenues en modifiant les premières données sur la base des informations contextuelles.

9. Dispositif électronique (1000) de la revendication 7,
dans lequel la deuxième réponse est générée par l'entrée des informations contextuelles dans un modèle génératif.

10. Dispositif électronique (1000) de la revendication 9,
dans lequel l'au moins un processeur (1300) est en outre configuré pour obtenir des données d'entraînement comprenant des informations relatives à l'utilisateur collectées par le dispositif électronique en tant qu'informations utilisées pour entraîner le modèle génératif,
dans lequel le modèle génératif est entraîné en se basant sur la corrélation entre les données d'entraînement et la deuxième réponse.

11. Dispositif électronique de la revendication 7, dans lequel l'au moins un processeur (1300) est en outre configuré pour :
obtenir des informations sur les caractéristiques du premier contenu, et
générer la deuxième réponse comprenant le deuxième contenu en se basant sur les informations sur les caractéristiques du premier contenu et les informations contextuelles.

12. Dispositif électronique (1000) de la revendication 7,
dans lequel les informations contextuelles comprennent au moins une caractéristique correspondant à chaque contexte de l'utilisateur, et
dans lequel l'au moins une caractéristique est déterminée sur la base des informations de retour de l'utilisateur sur la réponse combinée, et les informations contextuelles sont obtenues sur la base de l'au moins une caractéristique.

13. Support de stockage lisible par ordinateur configuré pour stocker un ou plusieurs programmes informatiques comprenant des instructions qui, lorsqu'elles sont exécutées par au moins un processeur (1300), amènent l'au moins un processeur (1300) à exécuter le procédé de l'une quelconque des revendications 1 à 6.
